# EUROPEAN PATENT APPLICATION

(11) **EP 4 848 369 A1**
(43) Date of publication of application: **02.12.2026**
(21) Application number: 25852392.7
(22) Date of filing: 05.08.2025
(51) Int. Cl.: H01M 4/525, H01M 4/505, H01M 10/0562, H01M 10/052, H01M 4/02

(54) **POSITIVE ELECTRODE ACTIVE MATERIAL AND LITHIUM SECONDARY BATTERY COMPRISING SAME**

(30) Priority: 05.08.2024 KR 20240103806; 04.08.2025 KR 20250107114
(71) Applicant: EcoPro BM Co., Ltd, Cheongju-si, Chungcheongbuk-do 28116 (KR)
(72) Inventor: JO, Min Su, Cheongju-si, Chungcheongbuk-do 28116 (KR); KWAK, Hwan Wook, Cheongju-si, Chungcheongbuk-do 28116 (KR); CHOI, Byeong Kil, Cheongju-si, Chungcheongbuk-do 28116 (KR); KIM, Ha Young, Cheongju-si, Chungcheongbuk-do 28116 (KR); KONG, Bo Hyun, Cheongju-si, Chungcheongbuk-do 28116 (KR); JANG, Woo Tae, Cheongju-si, Chungcheongbuk-do 28116 (KR); HWANG, Do Young, Cheongju-si, Chungcheongbuk-do 28116 (KR); SON, Yu Jin, Cheongju-si, Chungcheongbuk-do 28116 (KR); CHOI, Woo Seok, Cheongju-si, Chungcheongbuk-do 28116 (KR)
(74) Representative: Vossius & Partner Patentanwälte Rechtsanwälte mbB
(86) International application number: PCT/KR2025/011712
(87) International publication number: WO 2026/034983

(57) **Abstract**

The present invention relates to a positive electrode active material and a lithium secondary battery comprising the same, and more particularly, to a positive electrode active material including a Mid-Ni type lithium transition metal oxide having a relatively low nickel content, as a positive electrode active material capable of improving the efficiency of reversible intercalation/deintercalation of lithium ions by locally forming regions having different interplanar distances in unit particles constituting the lithium transition metal oxide having a polycrystalline structure, and thereby improving the insufficient electrochemical properties of the Mid-Ni type lithium transition metal oxide compared to those of a High-Ni type lithium transition metal oxide having a relatively high content of nickel, and a lithium secondary battery comprising the same.

## Description

### BACKGROUND

### 1. Field of the Invention

The present invention relates to a positive electrode active material and a lithium secondary battery comprising the same, and more particularly, to a positive electrode active material including a Mid-Ni type lithium transition metal oxide having a relatively low nickel content, as a positive electrode active material capable of improving the efficiency of reversible intercalation/deintercalation of lithium ions by locally forming regions having different interplanar distances in unit particles constituting the lithium transition metal oxide having a polycrystalline structure, and thereby improving the insufficient electrochemical properties of the Mid-Ni type lithium transition metal oxide compared to those of a High-Ni type lithium transition metal oxide having a relatively high content of nickel, and a lithium secondary battery comprising the same.

### 2. Discussion of Related Art

A battery stores power by using materials capable of an electrochemical reaction at a positive electrode and a negative electrode. Among such batteries, a representative example is a lithium secondary battery that stores electrical energy by a difference in chemical potential when lithium ions are intercalated/deintercalated at a positive electrode and a negative electrode.

The lithium secondary battery is prepared by using a material capable of reversible intercalation/deintercalation of lithium ions as positive and negative electrode active materials, and filling an organic electrolyte or polymer electrolyte between the positive electrode and the negative electrode.

As a positive electrode active material of a lithium secondary battery, a lithium transition metal oxide is being used, and as examples thereof, composite oxides such as LiCoO₂, LiMn₂O₄, LiNiO₂, and LiMnO₂ are being studied.

Among the positive electrode active materials, LiCoO₂ is most widely used because of excellent cycle life characteristics and excellent charge/discharge efficiency, but has a disadvantage in that its price competitiveness is limited because it is expensive due to resource limitations of cobalt used as a raw material.

Lithium manganese oxides, such as LiMnO₂ and LiMn₂O₄, offer advantages of excellent thermal safety and low cost, but issues of small capacity and poor high-temperature characteristics have been raised. In addition, a LiNiO₂-based positive electrode active material has an advantage of high discharge capacity, but there is a problem in that it is difficult to synthesize due to active cation mixing of Li and Ni, and the rate capability and cycle life characteristics of the synthesized positive electrode active material are very low.

Accordingly, in order to improve the low rate capability and cycle life characteristics while maintaining the high reversible capacity of LiNiO₂, ternary-type lithium transition metal oxides such as so-called NCM (Ni-Co-Mn) and NCA (Ni-Co-Al) or quaternary-types such as NCMA (Ni-Co-Mn-Al), in which a portion of nickel is substituted with cobalt, manganese and/or aluminum, have been developed. Since reversible capacity decreases as the content of nickel in such ternary-type or quaternary-type lithium transition metal oxides decreases, recently, research to increase the content of nickel in lithium transition metal oxides is being actively conducted.

However, as the content of nickel in the lithium transition metal oxide increases, there are problems that cation mixing in the crystal structure increases, thereby reducing stability, or the content of unreacted lithium impurities, such as LiOH and Li₂CO₃, on the surface increases.

As the content of lithium impurities remaining on the surface of the lithium transition metal oxide increases, gas generation and swelling in a lithium secondary battery using the lithium transition metal oxide as a positive electrode active material may be promoted. In addition, as the content of lithium impurities remaining on the surface of the lithium transition metal oxide increases, there is a problem that a paste composition is gelled by lithium impurities when preparing a paste for forming a positive electrode active material layer using the lithium transition metal oxide.

Accordingly, in the preparation process of the positive electrode active material, a washing process for removing lithium impurities remaining on the surface of the lithium transition metal oxide must be included. However, as the surface of the lithium transition metal oxide is damaged through such a washing process, the electrochemical characteristics and stability of a lithium secondary battery using the lithium transition metal oxide as a positive electrode active material are degraded, and in particular, premature degradation of cycle life may occur.

In addition, as the demand for lithium secondary batteries has rapidly grown recently and the cost of raw materials has also increased, the lithium secondary battery market has faced a strong demand for cost reduction. In particular, the positive electrode active material accounts for the largest proportion of the cost of a lithium secondary battery, and as the content of nickel, which is an essential element of a ternary-type or quaternary-type lithium transition metal oxide, in the positive electrode active material increases, the cost of the positive electrode active material also inevitably increases.

That is, when the nickel content in the positive electrode active material increases, the reversible capacity is improved, but problems present in a trade-off relationship, such as an increase in lithium impurities in the positive electrode active material and an increase in the cost of the positive electrode active material, occur.

Therefore, there is a need to develop a Mid-Ni type positive electrode active material capable of solving problems such as degradation of electrochemical characteristics due to a decrease in the nickel content in the positive electrode active material, while achieving improved stability and cost reduction by reducing the nickel content of the positive electrode active material.

### SUMMARY OF THE INVENTION

In the lithium secondary battery market, the growth of lithium secondary batteries for electric vehicles is driving the market, and accordingly, demand for positive electrode active materials used in lithium secondary batteries is also continuously increasing.

For example, conventionally, lithium secondary batteries using lithium iron phosphate (LFP) have been mainly used to ensure safety, but recently, the use of nickel-based lithium transition metal oxides having a higher energy capacity per weight compared to LFP is expanding (of course, relatively inexpensive LFP is still used to reduce costs).

In addition, recently, nickel-based lithium transition metal oxides, which are mainly used as positive electrode active materials of high-capacity lithium secondary batteries, generally have a ternary-type composition such as NCM (Ni-Co-Mn) or NCA (Ni-Co-Al), or a quaternary-type composition such as NCMA (Ni-Co-Mn-Al), in which the content of nickel is about 70 to 80 mol% or more.

However, as described above, when the content of nickel in the lithium transition metal oxide increases, the reversible capacity is improved, but problems in which lithium impurities in the positive electrode active material increase or stability of the positive electrode active material is degraded may occur. In addition, problems present in a trade-off relationship, such as an increase in the cost of the positive electrode active material, inevitably occur.

Conversely, when the content of nickel in the lithium transition metal oxide is reduced in order to achieve the goal of reducing the cost of the positive electrode active material, problems in which electrochemical characteristics such as capacity or rate capability (discharge capacity ratio) are degraded may occur.

Accordingly, an object of the present invention is to provide a positive electrode active material including a Mid-Ni type lithium transition metal oxide having a relatively low nickel content (e.g., about 70 mol% or less or about 65 mol% or less), in which regions having different interplanar distances are locally formed in unit particles constituting the lithium transition metal oxide, thereby improving the efficiency of intercalation/deintercalation of lithium ions of the Mid-Ni type lithium transition metal oxide, and thereby making it possible to improve electrochemical characteristics insufficient compared to a High-Ni type lithium transition metal oxide having a relatively high content of nickel.

In addition, an object of the present invention is to provide a positive electrode active material including a Mid-Ni type lithium transition metal oxide having a relatively low nickel content (e.g., about 70 mol% or less or about 65 mol% or less), in which regions having different interplanar distances are locally formed in unit particles constituting a polycrystalline lithium transition metal oxide, thereby making it possible to improve structural stability during charge/discharge of the Mid-Ni type lithium transition metal oxide.

In addition, another object of the present invention is to provide a positive electrode and a lithium secondary battery using the positive electrode active material defined herein.

The objects of the present invention are not limited to the objects mentioned above, and other objects and advantages of the present invention that are not mentioned may be understood by the following description and will be more clearly understood by embodiments of the present invention. In addition, it will be easily understood that the objects and advantages of the present invention may be realized by means shown in the claims and combinations thereof.

The present invention for solving the above-described technical problem includes the following inventions.
[1] A positive electrode active material comprising a lithium transition metal oxide capable of reversible intercalation/deintercalation of lithium ions, wherein the lithium transition metal oxide has a form of secondary particles in which a plurality of unit particles are agglomerated, at least one of the unit particles includes a first region and a second region having different average values of an interplanar distance (d-spacing) for a (003) crystal plane, and the second region is locally present in the unit particle.
[2] The positive electrode active material described in [1], wherein the positive electrode active material includes secondary particles having a hollow structure.
[3] The positive electrode active material described in any one of [1] and [2], wherein the secondary particles having a hollow structure are divided into a low-density region in which a gap is present between adjacent unit particles and a high-density region having a higher agglomeration density of the unit particles than the low-density region, and the average value of a ratio of an outer diameter of the low-density region to a particle diameter of the secondary particles is 5% to 90%.
[4] The positive electrode active material described in any one of [1] to [3], wherein the second region is present as an isolated region in the unit particle.
[5] The positive electrode active material described in any one of [1] to [3], wherein the second region is present in a plurality of independent island shapes in the unit particle.
[6] The positive electrode active material described in any one of [1] to [3], wherein at least a part of the second region is present to be in contact with a surface of the unit particle.
[7] The positive electrode active material described in any one of [1] to [6], wherein the lithium transition metal oxide partially includes unit particles in which the second region is locally present.
[8] The positive electrode active material described in any one of [1] to [6], wherein the average interplanar distance (d-spacing) of a (003) crystal plane in the first region is greater than that of a (003) crystal plane in the second region.
[9] The positive electrode active material described in any one of [1] to [8], wherein the average interplanar distance (d-spacing) of a (003) crystal plane in the first region is smaller than that of a (003) crystal plane in the second region.
[10] The positive electrode active material described in any one of [1] to [9], wherein the average content of manganese in the second region is greater than that of manganese in the first region.
[11] The positive electrode active material described in any one of [1] to [10], wherein the ratio (c2/c1) of the average manganese content (c2) in the second region to the average manganese content (c1) in the first region is greater than 1 and 2 or less.
[12] The positive electrode active material described in any one of [1] to [11], wherein the lithium transition metal oxide has an average composition represented by Chemical Formula 1 below.

   [Chemical Formula 1] LiₐNi_{1-(b+c+d)}Co_{b}Mn_{c}M1_{d}O₂

   In Chemical Formula 1,
   M1 is at least one selected from Na, K, Mg, Ba, B, Ce, Hf, Ta, Cr, F, Al, V, Ti, Fe, Zr, Zn, Si, Y, Nb, Ga, Sn, W, Mo, P, Sr, Ge, Nd, Gd, and Cu, and
   0.95≤a≤1.15, 0.02≤b≤0.20, 0.15≤c≤0.35, 0≤d≤0.2, and 0.3≤1-(b+c+d)<0.7.
[13] The positive electrode active material described in any one of [1] to [12], wherein the average particle diameter (D₅₀) of the unit particles ranges from 0.02 µm to 0.5 µm.
[14] The positive electrode active material described in any one of [1] to [13], wherein the average particle diameter (D₅₀) of the secondary particles ranges from 2.0 µm to 18.0 µm.
   In addition, the present invention includes other aspects as below.
[15] A positive electrode comprising the positive electrode active material described in any one of [1] to [14].
[16] A lithium secondary battery using the positive electrode described in [15].

According to the present invention, by locally forming regions having different interplanar distances in unit particles constituting a polycrystalline lithium transition metal oxide, the efficiency of reversible intercalation/deintercalation of lithium ions can be improved, and thereby the electrochemical characteristics of the Mid-Ni type lithium transition metal oxide that are insufficient compared to a High-Ni type lithium transition metal oxide having a relatively high content of nickel, particularly capacity or rate capability (discharge capacity ratio), can be improved.

In addition, according to the present invention, in a positive electrode active material including a Mid-Ni type lithium transition metal oxide having a relatively low nickel content (e.g., about 70 mol% or less or about 65 mol% or less), structural stability during charging/discharging of the Mid-Ni type lithium transition metal oxide can be improved by locally forming regions having different interplanar distances in unit particles constituting the polycrystalline lithium transition metal oxide.

In addition to the above-described effects, specific effects of the present invention will be described together while explaining specific matters for carrying out the invention below.

### BRIEF DESCRIPTION OF THE DRAWINGS

FIG. 1 shows a cross-sectional SEM image of a lithium transition metal oxide included in a positive electrode active material according to PAM1 prepared according to Preparation Example 1.
FIG. 2 shows a cross-sectional SEM image of a lithium transition metal oxide included in a positive electrode active material according to PAM2 prepared according to Preparation Example 1.
FIG. 3 shows a cross-sectional SEM image of a lithium transition metal oxide included in a positive electrode active material according to PAM3 prepared according to Preparation Example 1.
FIG. 4 shows a cross-sectional SEM image of a lithium transition metal oxide included in a positive electrode active material according to PAM4 prepared according to Preparation Example 1.
FIG. 5 shows the SEM-EDS mapping results of PAM1.
FIG. 6 shows the SEM-EDS mapping results of PAM2.
FIG. 7 shows the SEM-EDS mapping results of PAM3.
FIG. 8 shows the SEM-EDS mapping results of PAM4.
FIG. 9 schematically shows the TEM-FFT analysis results of PAM1.

### DETAILED DESCRIPTION OF EXEMPLARY EMBODIMENTS

For easier understanding of the present invention, specific terms are defined herein for convenience. Unless otherwise defined herein, scientific terms and technical terms used in the present invention will have meanings generally understood by those of ordinary skill in the art. In addition, unless otherwise specified in the context, it should be understood that the singular includes the plural, and the plural includes the singular.

Hereinafter, a positive electrode active material according to the present invention and a lithium secondary battery using a positive electrode comprising the positive electrode active material will be described in more detail.

### Positive Electrode Active Material

Herein, the positive electrode active material includes a lithium transition metal oxide capable of reversible intercalation/deintercalation of lithium ions. Here, the lithium transition metal oxide refers to an oxide in which lithium and a metal element are combined.

The lithium transition metal oxide is a composite metal oxide capable of intercalation/deintercalation of lithium ions, and has a layered crystal structure belonging to the R-3m space group. The lithium transition metal oxide having a layered crystal structure shows a specific peak in a region where 20 is 18° to 20° among diffraction patterns obtained from XRD analysis.

The lithium transition metal oxide includes at least lithium and a transition metal. The transition metal may include at least one, at least two, or all selected from nickel, cobalt and manganese.

Preferably, the lithium transition metal oxide may be a lithium nickel-based composite oxide containing nickel. In addition, the lithium transition metal oxide may be a lithium nickel-based composite oxide containing nickel and cobalt.

In order to improve low rate capability and cycle life characteristics while maintaining the high reversible capacity of LiNiO₂, the lithium nickel-based composite oxide may be a ternary type such as the so-called NCM (Ni-Co-Mn) or NCA (Ni-Co-Al), or a quaternary type lithium transition metal oxide such as NCMA (Ni-Co-Mn-Al), in which a part of nickel is substituted with cobalt, manganese and/or aluminum. The ternary-type or quaternary-type lithium transition metal oxide may further contain a dopant other than nickel, cobalt, manganese, and aluminum.

The lithium transition metal oxide may be a cobalt-free type lithium transition metal oxide that does not include cobalt in bulk particles. The cobalt-free type lithium transition metal oxide may further contain a dopant other than nickel, cobalt and manganese.

The lithium transition metal oxide defined herein is a Mid-Ni type lithium transition metal oxide having a relatively low nickel content. Herein, a lithium transition metal oxide in which the content of nickel among the transition metals is less than 70 mol% is referred to as a Mid-Ni type lithium transition metal oxide, and a lithium transition metal oxide in which the content of nickel among the transition metals is 70 mol% or more is defined as a High-Ni type lithium transition metal oxide.

In a conventional Mid-Ni type lithium transition metal oxide, as the content of manganese becomes greater than the content of cobalt, kinetic characteristics such as lithiumion conductivity are poor, and thus rate capability may be degraded. However, the lithium transition metal oxide according to the present invention can prevent the above-described problems by forming a plurality of regions having distinct crystallographic characteristics (e.g., interplanar distance) in unit particles.

The lithium transition metal oxide may have an average composition represented by Chemical Formula 1 below. The average composition of the lithium transition metal oxide may be measured according to a known ICP analysis method using an inductively coupled plasma spectrometer (ICP).

[Chemical Formula 1] LiₐN_{1-(b+c+d)}Co_{b}Mn_{c}M1_{d}O₂

In Chemical Formula 1,
M1 is at least one selected from Na, K, Mg, Ba, B, Ce, Hf, Ta, Cr, F, Al, V, Ti, Fe, Zr, Zn, Si, Y, Nb, Ga, Sn, W, Mo, P, Sr, Ge, Nd, Gd, and Cu, and
0.95≤a≤1.15, 0.02≤b≤0.20, 0.15≤c≤0.35, 0≤d≤0.2, and 0.3≤1-(b+c+d)<0.7.

In the lithium transition metal oxide, a, which represents the ratio (Li/Ni+Co+Mn+M1) of lithium to all elements other than lithium, may be 0.95 or more, 0.96 or more, 0.97 or more, 0.98 or more, 0.99 or more, 1.00 or more, 1.01 or more, 1.02 or more, 1.03 or more, 1.04 or more, or 1.05 or more. In addition, a may be 1.15 or less, 1.14 or less, 1.13 or less, 1.12 or less, 1.11 or less, 1.10 or less, 1.09 or less, 1.08 or less, 1.07 or less, 1.06 or less, or 1.05 or less. The upper and lower limits of the mole fraction of lithium to all elements other than lithium in the lithium transition metal oxide may be appropriately selected within a range satisfying the above-described definition. When the mole fraction of lithium in the lithium transition metal oxide satisfies the above range, a stable crystal structure can be formed. For example, when a in Chemical Formula 1 is less than 0.95, the capacity of a positive electrode active material including the lithium transition metal oxide represented by Chemical Formula 1 may be degraded. On the other hand, when a in Chemical Formula 1 is greater than 1.15, phase separation may be caused by lithium and manganese excessively present in the lithium transition metal oxide, and an impurity phase belonging to a space group other than the R-3m space group may occur.

In Chemical Formula 1, 1-(b+c+d), which represents the ratio (Ni/Ni+Co+Mn+M1) of nickel to all elements other than lithium in the lithium transition metal oxide, may be 0.30 or more, 0.35 or more, 0.40 or more, 0.45 or more, 0.50 or more, 0.51 or more, 0.52 or more, 0.53 or more, 0.54 or more, 0.55 or more, 0.56 or more, 0.57 or more, 0.58 or more, 0.59 or more, or 0.60 or more. In addition, 1-(b+c+d) may be less than 0.70, 0.69 or less, 0.68 or less, 0.67 or less, 0.66 or less, or 0.65 or less. The upper and lower limits of the mole fraction of nickel to all elements other than lithium in the lithium transition metal oxide may be appropriately selected within a range satisfying the above-described definition. When the mole fraction of nickel in the lithium transition metal oxide satisfies the above range, a stable Mid-Ni type crystal structure may be formed.

For example, when the content of nickel in the lithium transition metal oxide is 70 mol% or more, cation mixing in the crystal structure may increase and stability may decrease, or the content of unreacted lithium impurities such as LiOH and Li₂CO₃ on the surface may increase. In addition, as described later, when there are a plurality of distinct regions present as crystal structures within unit particles constituting the lithium transition metal oxide, the stability of the crystal structure may rather be degraded due to excessive nickel.

On the other hand, when the nickel content in the lithium transition metal oxide is less than 30 mol%, phase separation may be caused by other transition metals (e.g., manganese) excessively present other than nickel, and an impurity phase belonging to a space group other than the R-3m space group may occur. The impurity phase may have a direct effect on the degradation of electrochemical properties of the positive electrode active material.

In Chemical Formula 1, b, which represents the ratio (Co/Ni+Co+Mn+M1) of cobalt to all elements other than lithium in the lithium transition metal oxide, may be 0.20 or less, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, or 0.05 or less. When the lithium transition metal oxide includes cobalt, b may be 0.02 or more, 0.03 or more, 0.04 or more, or 0.05 or more. The upper and lower limits of the mole fraction of cobalt to all elements other than lithium in the lithium transition metal oxide may be appropriately selected within a range satisfying the above-described definition. When the mole fraction of cobalt in the lithium transition metal oxide satisfies the above range, a stable crystal structure may be formed and good output characteristics may be exhibited.

For example, when the content of cobalt in the lithium transition metal oxide exceeds 20 mol%, the goal of cost-reduction of the positive electrode active material cannot be achieved. In addition, when the content of cobalt in the lithium transition metal oxide becomes excessively large, the operating voltage of a lithium secondary battery using the positive electrode active material is lowered, and it may be difficult to exhibit high output characteristics at a relatively high voltage. In addition, as described below, when there are a plurality of distinct regions present as crystal structures within unit particles constituting the lithium transition metal oxide, the stability of the crystal structure may rather be degraded due to excessive cobalt.

In Chemical Formula 1, c, which represents a ratio (Mn/Ni+Co+Mn+M1) of manganese to all elements other than lithium in the lithium transition metal oxide, may be 0.15 or more, 0.16 or more, 0.17 or more, 0.18 or more, 0.19 or more, 0.20 or more, 0.21 or more, 0.22 or more, 0.23 or more, 0.24 or more, 0.25 or more, 0.26 or more, 0.27 or more, 0.28 or more, 0.29 or more, or 0.30 or more. In addition, c may be 0.35 or less, 0.34 or less, 0.33 or less, 0.32 or less, 0.31 or less, 0.30 or less, 0.29 or less, 0.28 or less, 0.27 or less, 0.26 or less, 0.25 or less, 0.24 or less, 0.23 or less, 0.22 or less, 0.21 or less, or 0.20 or less. When the mole fraction of manganese in the lithium transition metal oxide satisfies the above range, a stable crystal structure may be formed.

When the content of manganese in the lithium transition metal oxide exceeds 35 mol%, phase separation may be promoted by manganese excessively present in the lithium transition metal oxide, and an impurity phase belonging to a space group other than the R-3m space group may be formed throughout the particles.

On the other hand, when the content of manganese in the lithium transition metal oxide is less than 15 mol%, an operating voltage of a lithium secondary battery using the positive electrode active material is lowered, and it may be difficult to exhibit high output characteristics at a relatively high voltage. In addition, it may be difficult to stably form a plurality of regions having distinct crystallographic characteristics (e.g., interplanar distance) in unit particles constituting the lithium transition metal oxide.

The lithium transition metal oxide further includes cobalt and manganese as transition metals, and the content of manganese in the lithium transition metal oxide may be greater than the content of cobalt.

In Chemical Formula 1, M1 refers to a dopant that can be incorporated into a crystal structure of the lithium transition metal oxide. The lithium transition metal oxide has a layered crystal structure in which a lithium layer including lithium and a transition metal layer including a transition metal are alternately arranged, and the dopant may be incorporated into at least one crystal layer of the lithium layer and the transition metal layer.

When the lithium transition metal oxide includes a dopant, in Chemical Formula 1, d, which represents a mole fraction (M1/Ni+Co+Mn+M1) of the dopant to all elements other than lithium in the lithium transition metal oxide, may be 0.20 or less, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.045 or less, 0.04 or less, 0.035 or less, 0.03 or less, 0.025 or less, 0.02 or less, 0.015 or less, 0.01 or less, 0.009 or less, 0.008 or less, 0.007 or less, 0.006 or less, 0.005 or less, 0.004 or less, 0.003 or less, 0.002 or less, or 0.001 or less.

When the lithium transition metal oxide selectively includes a dopant, the dopant may include at least one selected from Na, K, Mg, Ba, B, Ce, Hf, Ta, Cr, F, Al, V, Ti, Fe, Zr, Zn, Si, Y, Nb, Ga, Sn, W, Mo, P, Sr, Ge, Nd, Gd, and Cu, preferably at least one selected from Mg, Ca, Ba, B, V, Ti, Fe, Zr, Zn, Si, Nb, Mo, W, and Cu, and more preferably at least one selected from Mg, Ca, Ba, B, Ti, Zr, Si, Nb, Mo, and W. The type, combination, and content of the dopant may be appropriately selected within a range that does not negatively affect electrochemical properties and stability of the positive electrode active material.

The lithium transition metal oxide may have a form of secondary particles in which a plurality of unit particles are agglomerated. The unit particle may be interpreted as having the same meaning as a primary particle.

The unit particle may have a rod shape, an elliptical shape, and/or an irregular shape. In addition, unless particularly intended in a preparation process, unit particles having various shapes may be present in the same positive electrode active material. In addition, the unit particle refers to a particle unit in which a grain boundary is not visible when observed using a scanning electron microscope at a magnification of 5,000 x to 20,000 x.

The average particle diameter (D₅₀) of the unit particles may be 0.02 µm to 0.5 µm, 0.03 µm to 0.5 µm, 0.04 µm to 0.5 µm, 0.05 µm to 0.5 µm, 0.06 µm to 0.5 µm, 0.07 µm to 0.8 µm, 0.09 µm to 0.5 µm, or 0.1 µm to 0.5 µm.

The average particle diameter (D₅₀) of the unit particles may be calculated as an average value ([major axis length+minor axis length]/2) of a length in a major axis direction and a length in a minor axis direction of the unit particles. The average particle diameter of the unit particles may be calculated as an average value of particle diameters of all unit particles observed from a surface SEM image and/or a cross-sectional SEM image of the lithium transition metal oxide according to a known method.

When the average particle diameter of the unit particles is less than 0.02 µm, a specific surface area of a positive electrode active material that includes the lithium transition metal oxide having a polycrystalline structure becomes excessively large, and degradation of stability due to a side reaction with an electrolyte may be caused.

On the other hand, when the average particle diameter of the unit particles is greater than 0.5 µm, it may be difficult to form a lithium transition metal oxide having a polycrystalline structure.

The average particle diameter of the secondary particles may be measured using a laser diffraction method. For example, the average particle diameter may be measured by dispersing the secondary particles in a dispersion medium, introducing the secondary particles into a commercially available laser diffraction particle size measuring device (e.g., Microtrac MT 3000), irradiating ultrasonic waves of about 28 kHz at an output of 60 W, obtaining a volume cumulative particle size distribution graph, and then obtaining a particle size corresponding to 50% of a volume cumulative amount.

The average particle diameter (D₅₀) of the lithium transition metal oxide may range from 2.0 µm to 18.0 µm.

For example, the positive electrode active material defined herein may be used as a positive electrode active material exhibiting a bimodal type or trimodal type particle size distribution in order to improve energy density per unit volume. Accordingly, the lithium transition metal oxide defined herein may be used as small particles and/or large particles of a positive electrode active material exhibiting a bimodal type particle size distribution, or may be used as small particles, medium particles (particles having a medium average particle diameter), and/or large particles of a positive electrode active material exhibiting a trimodal type particle size distribution.

When the lithium transition metal oxide defined herein is used as small particles of a positive electrode active material exhibiting a bimodal type particle size distribution or a positive electrode active material exhibiting a trimodal type particle size distribution, the average particle diameter (D₅₀) of the secondary particles may be 2.0 µm to 8.0 µm, 2.0 µm to 6.0 µm, or 2.0 µm to 5.0 µm.

When the lithium transition metal oxide defined herein is used as large particles of a positive electrode active material exhibiting a bimodal type particle size distribution or a positive electrode active material exhibiting a trimodal type particle size distribution, the average particle diameter (D₅₀) of the secondary particles may be 6.0 µm to 18.0 µm, 6.0 µm to 16.0 µm, or 6.0 µm to 15.0 µm.

When the lithium transition metal oxide defined herein is used as medium particles of a positive electrode active material exhibiting a trimodal type particle size distribution, the average particle diameter (D₅₀) of the secondary particles may be 5.0 µm to 15.0 µm, 5.0 µm to 10.0 µm, or 5.0 µm to 8.0 µm.

Herein, "particle size" is used as having the same meaning as "particle diameter," and unless otherwise defined, all "average particle diameters" mean median volume-based particle diameters determined by a laser diffraction method.

The positive electrode active material may include secondary particles having a hollow structure. Accordingly, the positive electrode active material may be formed of secondary particles having a hollow structure, or may include secondary particles having a hollow structure and secondary particles not having a hollow structure. A secondary particle having a hollow structure means that pores having a size of tens to hundreds of nm or more are present in a central portion. The pores present in the central portion of the secondary particles refer to gaps formed between adjacent unit particles.

The secondary particles having a hollow structure may be divided into a low-density region in which gaps are present between adjacent unit particles and a high-density region having a higher agglomeration density of the unit particles than the low-density region.

The low-density region has a lower agglomeration density of the unit particles than the high-density region, and forms a hollow in the central portion of the secondary particles as gaps are present between the unit particles. The agglomeration density of the unit particles may mean the number of unit particles present in a reference area. For example, the agglomeration density of the unit particles may be calculated as the number of unit particles in a reference area in the low-density region and the number of unit particles in a reference area in the high-density region, based on a cross-sectional SEM image of the secondary particles (the reference area in the low-density region and the reference area in the high-density region are the same area).

The low-density region may be formed throughout the secondary particles, but may be partially formed. In addition, a plurality of low-density regions may be present in the secondary particles. The presence of a plurality of low-density regions in the secondary particles may mean that a plurality of hollows are present in the secondary particles.

In addition, for convenience, the low-density region and the high-density region may be divided based on a ratio of an outer diameter to a particle diameter of the secondary particles. The average value of the ratio of the outer diameter of the low-density region to the particle diameter of the secondary particles may be 5% to 90%, 5% to 80%, 5% to 70%, 5% to 60%, or 5% to 50%. When the average value of the ratio of the outer diameter of the low-density region to the particle diameter of the secondary particles exceeds 90%, there is a concern that the physical strength of the secondary particles may be degraded.

As the secondary particles have the above-described hollow structure, even though regions having different interplanar distances in unit particles are locally formed, degradation of structural stability during charging/discharging can be prevented and/or alleviated in advance.

Herein, in order to improve the efficiency of reversible intercalation/deintercalation of lithium ions by the lithium transition metal oxide, thereby improving electrochemical properties that are insufficient compared to a High-Ni type lithium transition metal oxide having a relatively high nickel content, the lithium transition metal oxide is characterized by locally forming regions having different interplanar distances in unit particles constituting the lithium transition metal oxide having a polycrystalline structure.

Specifically, at least one of the unit particles constituting the lithium transition metal oxide may include a first region and a second region having distinct crystallographic characteristics (e.g., interplanar distance). The first region and the second region may be distinguished by an interplanar distance (d-spacing) for a (003) crystal plane. The average values of the interplanar distances (d-spacing) for the (003) crystal plane in the first region and the second region may be measured through cross-sectional TEM analysis of the unit particles according to a known method. For example, the interplanar distance for the (003) crystal plane in the unit particles may be measured through atomic-level high-resolution imaging analysis (HR-TEM) of a cross-sectional TEM image of the lithium transition metal oxide. That is, the interplanar distance for the (003) crystal plane in the unit particles refers to a distance between adjacent (003) crystal planes from an electron diffraction pattern obtained through HR-TEM analysis.

The average values of the interplanar distances (d-spacing) for the (003) crystal plane in the first region and the second region may differ, and the second region may be locally present in the unit particles. The second region locally present in the unit particles means that a distorted region having a different interplanar distance is present in unit particles having a uniform interplanar distance for the (003) crystal plane. That is, a region having the average interplanar distance of the lithium transition metal oxide including the unit particles is the first region, and a region having an interplanar distance significantly different from the first region may be defined as the second region.

Conversely, the absence of the second region in the unit particles means that there is no region in which the interplanar distance (d-spacing) of the (003) crystal plane in unit particles constituting the lithium transition metal oxide is significantly different. When the second region is not present in the unit particles, a difference between a maximum value and a minimum value of the interplanar distance (d-spacing) of the (003) crystal plane in the unit particles may be less than 0.01 Å.

The average value of the interplanar distance (d-spacing) for the (003) crystal plane in the first region may be greater or smaller than the average value of the interplanar distance (d-spacing) for the (003) crystal plane in the second region, and preferably, the average value of the interplanar distance (d-spacing) for the (003) crystal plane in the first region may be smaller than the average value of the interplanar distance (d-spacing) for the (003) crystal plane in the second region. In this case, an absolute value (|d1-d2|) of the difference between the average value (d1) of the interplanar distance (d-spacing) for the (003) crystal plane in the first region and the average value (d2) of the interplanar distance (d-spacing) for the (003) crystal plane in the second region may be 0.01 Å or more, 0.02 Å or more, or 0.03 Å or more.

That is, the second region locally present in the unit particles means that a distorted region having an average interplanar distance (d-spacing) (d2), in which the absolute value of the difference from the average value (d1) of the interplanar distance (d-spacing) for the (003) crystal plane in the first region is 0.01 Å or more, 0.02 Å or more, or 0.03 Å or more, is locally present in the unit particles.

Herein, the first region and the second region having distinct crystallographic characteristics means that interplanar distances for any crystal plane in the first region and the second region are different.

In addition, both the first region and the second region may have phases belonging to the R-3m space group, but are not necessarily limited thereto. For example, both the first region and the second region may consist only of phases belonging to the R-3m space group, and the interplanar distances for the (003) crystal plane in the first region and the second region may differ. In another case, the first region may consist only of a phase belonging to the R-3m space group, whereas the second region may consist only of a phase belonging to a space group other than the R-3m space group (e.g., a phase belonging to the c2/m space group), or may be a region in which a phase belonging to the R-3m space group and a phase belonging to a space group other than the R-3m space group coexist.

The second region may be present as an isolated region in the unit particles, or may be present in the form of a plurality of independent islands in the unit particles. In addition, at least a part of the second region may be in contact with the surface of the unit particles.

In addition, at least some unit particles constituting the lithium transition metal oxide may include the first region and the second region, or all unit particles constituting the lithium transition metal oxide may include the first region and the second region.

The average content of manganese in the second region may be greater than the average content of manganese in the first region. At this time, the ratio (c2/c1) of the average content (c2) of manganese in the second region to the average content (c1) of manganese in the first region may be greater than 1 and 2 or less, 1.05 or more and 2 or less, or 1.1 or more and 2 or less. Alternatively, a difference between the average content of manganese in the second region and the average content of manganese in the first region may be 5 mol% to 20 mol%.

When the difference between the average content of manganese in the second region and the average content of manganese in the first region is less than 5 mol%, it may be difficult for the first region and the second region to have distinct crystallographic characteristics. That is, it may be difficult to cause the absolute value (|d1-d2|) of the difference between the average value (d1) of the interplanar distance (d-spacing) for the (003) crystal plane in the first region and the average value (d2) of the interplanar distance (d-spacing) for the (003) crystal plane in the second region to be 0.01 Å or more. In this case, it may be difficult to improve electrochemical properties, particularly capacity or rate capability (discharge capacity ratio), of the Mid-Ni type lithium transition metal oxide, which are insufficient compared to the High-Ni type lithium transition metal oxide having a relatively high nickel content.

On the other hand, when the difference between the average content of manganese in the second region and the average content of manganese in the first region is greater than 20 mol%, the difference between the content of manganese in the first region and the content of manganese in the second region is excessively large, and instability of the crystal structure of the particles may rapidly increase.

In addition, as the average content of manganese in the second region is greater than the average content of manganese in the first region, the average nickel content in the second region may be smaller than the average nickel content in the first region.

On the other hand, a difference between the average content of cobalt in the first region and the average content of cobalt in the second region may not be significant. The fact that the difference between the average content of cobalt in the first region and the average content of cobalt in the second region is not significant may mean that the average content of cobalt in the first region and the average content of cobalt in the second region are the same, or that the difference between the average content of cobalt in the first region and the average content of cobalt in the second region is 5 mol% or less.

### Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the positive electrode active material is the same as described above, for convenience, a detailed explanation will be omitted, and only the components that have not been described will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 µm to 500 µm, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material may be included in an amount of 80 wt% to 99 wt%, specifically 85 wt% to 98.5 wt%, with respect to the total weight of the positive electrode slurry for forming the positive electrode active material layer. When the positive electrode active material is included in this content range, excellent capacity characteristics may be exhibited, but the present invention is not necessarily limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode slurry for forming the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator, which is interposed between the positive electrode and the negative electrode, and an electrolyte. Since the positive electrode is the same as described above, detailed description of the positive electrode will be omitted for convenience, and other components which have not been described above will be described in detail below.

The lithium secondary battery may further optionally include a battery case accommodating an electrode assembly of the positive electrode, the negative electrode and the separator, and a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminumcadmium alloy. In addition, the negative electrode current collector may generally have a thickness of 3 µm to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode slurry for forming the negative electrode active material layer.

The binder is a component that assists in the bonding between a conductive material, an active material, and a current collector, and may typically be added in an amount of 0.1 wt% to 10 wt% with respect to the total weight of the negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode slurry for forming the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker consisting of zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used as a separator in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure including two or more layers thereof may be used. In addition, a conventional porous non-woven fabric, such as a non-woven fabric made of high melting point glass fiber or polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used herein may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbonbased solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C₂ to C₂₀ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery and a lowviscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 M to 2.0 M. When the concentration of the lithium salt is within this range, the electrolyte has appropriate conductivity and viscosity, exhibiting excellent electrolyte performance, and thus lithium ions may move effectively.

When the electrolyte used herein is a solid electrolyte, for example, a solid inorganic electrolyte such as a sulfide-based solid electrolyte, an oxide-based solid electrolyte, a nitridebased solid electrolyte, or a halide-based solid electrolyte may be used, and preferably, a sulfide-based solid electrolyte may be used.

As a material for the sulfide-based solid electrolyte, a solid electrolyte containing Li, an X element (where X is at least one selected from P, As, Sb, Si, Ge, Sn, B, Al, Ga, and In) and S may be used. Examples of the sulfide-based solid electrolyte material may include Li₂S-P₂S₅, Li₂S-P₂S₅-LiX (where X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are integers, and Z is Ge, Zn, or Ga), Li₂S-GeS₂, Li₂S-SiS₂-Li₃PO₄, and Li₂S-SiS₂-LiₚMO_{q} (where p and q are integers, and M is P, Si, Ge, B, Al, Ga, or In).

The solid electrolyte, preferably, the sulfide-based solid electrolyte, may be amorphous, crystalline, or in a state in which an amorphous phase and crystalline phase are mixed.

Materials for the oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. The additive may be included in an amount of 0.1 wt% to 5 wt% with respect to the total weight of the electrolyte.

Since the lithium secondary battery including the positive electrode active material according to the present invention stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery according to the present invention is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to yet another aspect of the present invention, there is provided a battery module including the lithium secondary battery as a unit cell and/or a battery pack including the same.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PHEV); and a power storage system.

Hereinafter, the present invention will be described in more detail through examples. However, these examples are only for the purpose of illustrating the present invention and should not be construed as limiting the scope of the present invention.

### Preparation Example 1. Preparation of positive electrode active material

### PAM1

(a) A Ni_{0.60}Co_{0.10}Mn_{0.30}(OH)₂ hydroxide precursor (Ni:Co:Mn = 60:10:30 (mol%)) was synthesized using nickel sulfate, cobalt sulfate, and manganese sulfate through a known co-precipitation method.
(b) The hydroxide precursor obtained in step (a), LiOH, and ZrO₂ were mixed to prepare a mixture. LiOH was mixed in an amount such that the Li/(Ni+Co+Mn+Zr) molar ratio based on the intermediate product became 0.70. ZrO₂ was mixed so as to be 0.2 mol% with respect to all metal elements except lithium in the mixture. Subsequently, the mixture was calcined at 800 °C for 6 hours under an O₂ atmosphere to obtain an intermediate product.
(c) The intermediate product obtained in step (b) and LiOH were mixed and then calcined at 600 °C for 10 hours under an O₂ atmosphere to obtain a final product. LiOH mixed with the intermediate product was used such that the Li/(Ni+Co+Mn+Zr) molar ratio based on the final product became 1.05.

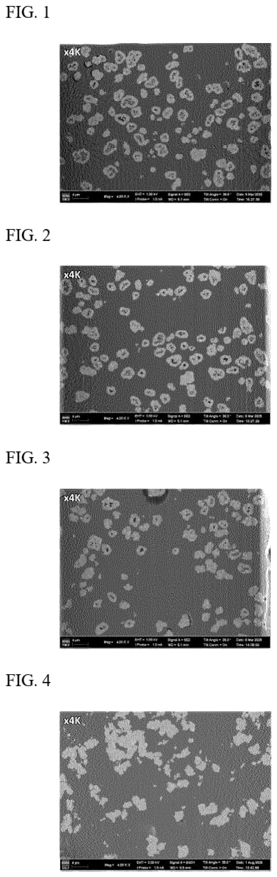

Referring to the cross-sectional SEM image of FIG. 1, it can be confirmed that the positive electrode active material according to PAM1 includes a lithium transition metal oxide having a polycrystalline structure. In addition, it can be confirmed that the positive electrode active material according to PAM1 includes a lithium transition metal oxide having a hollow structure.

### PAM2

A positive electrode active material was prepared in the same manner as PAM1, except that the heat treatment temperature of step (c) was 800 °C.

Referring to the cross-sectional SEM image of FIG. 2, it can be confirmed that the positive electrode active material according to PAM2 includes a lithium transition metal oxide having a polycrystalline structure. In addition, it can be confirmed that the positive electrode active material according to PAM2 includes a lithium transition metal oxide having a hollow structure.

### PAM3

A positive electrode active material was prepared in the same manner as PAMI, except that the heat treatment temperature of step (c) was 900 °C.

Referring to the cross-sectional SEM image of FIG. 3, it can be confirmed that the positive electrode active material according to PAM3 includes a lithium transition metal oxide having a polycrystalline structure. In addition, it can be confirmed that the positive electrode active material according to PAM3 includes a lithium transition metal oxide having a hollow structure.

### PAM4

(a) A Ni_{0.60}Co_{0.10}Mn_{0.30}(OH)₂ hydroxide precursor (Ni:Co:Mn = 60:10:30 (mol%)) was synthesized using nickel sulfate, cobalt sulfate, and manganese sulfate through a known co-precipitation method.
(b) The hydroxide precursor obtained in step (a), LiOH, and ZrO₂ were mixed to prepare a mixture. LiOH was mixed in an amount such that a Li/(Ni+Co+Mn+Zr) molar ratio based on the intermediate product became 1.05. ZrO₂ was mixed so as to be 0.2 mol% with respect to all metal elements except lithium in the mixture. Subsequently, the mixture was calcined at 900 °C for 10 hours under an O₂ atmosphere to obtain a final product.

Referring to the cross-sectional TEM image of FIG. 4, it can be confirmed that the positive electrode active material according to PAM4 includes a lithium transition metal oxide having a polycrystalline structure. However, unlike PAM1 to PAM3, it can be confirmed that the positive electrode active material according to PAM4 does not have a hollow structure.

### Preparation Example 2. Preparation of lithium secondary battery (half-cell)

A positive electrode slurry was prepared by dispersing 94 wt% of each of the positive electrode active materials prepared according to Preparation Example 1, 3 wt% of carbon black, and 3 wt% of a PVDF binder in 30 g of N-methyl-2-pyrrolidone (NMP). The positive electrode slurry was uniformly applied to an aluminum thin film having a thickness of 15 µm and vacuum-dried at 135 °C to prepare a positive electrode for a lithium secondary battery.

A half-cell was prepared using lithium foil as a counter electrode for the positive electrode, a porous polyethylene membrane (Celgard 2300, thickness: 25 µm) as a separator, and an electrolyte in which LiPF₆ was present at a concentration of 1.15 M in a solvent in which ethylene carbonate and ethyl methyl carbonate were mixed at a volume ratio of 3:7.

### Experimental Example 1. SEM-EDS analysis of positive electrode active material

Each positive electrode active material prepared in Preparation Example 1 was crosssectionally treated with a cross-section polisher (acceleration voltage 5.0 kV, 4 hours milling), and then photographed with a field emission scanning electron microscope (FE-SEM) to obtain a cross-sectional FE-SEM image. Subsequently, Ni, Co, and Mn, which are target elements, were EDS-mapped onto the cross-sectional FE-SEM image.

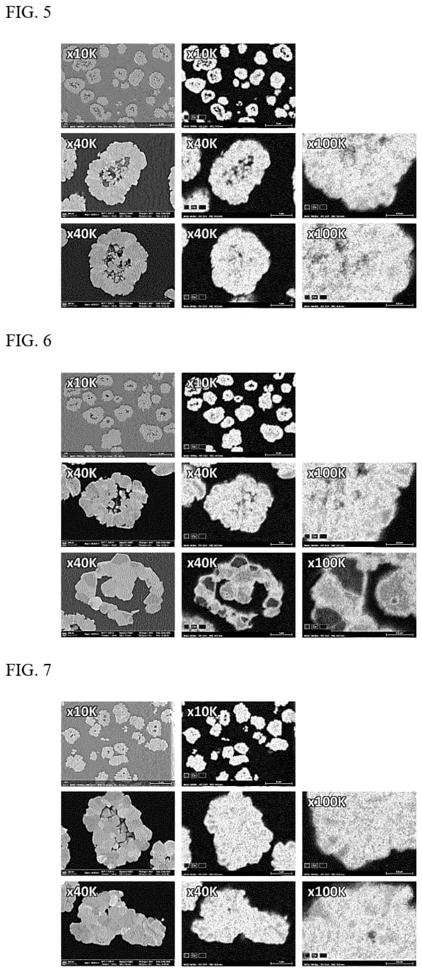

Referring to FIGS. 5 to 8 showing the SEM-EDS mapping results of PAM1 to PAM4, it can be confirmed that at least one unit particle constituting the lithium transition metal oxide observed from PAM 1 to PAM3 has a region in which manganese is locally concentrated (when the SEM-EDS mapping image is converted into grayscale, the degree of distribution of manganese may appear somewhat unclear. However, in the SEM-EDS mapping image converted into grayscale, a region having a stronger signal of manganese is expressed as relatively darker pixels, and accordingly, a region having a relatively high density of dark pixels may be interpreted as a region in which manganese is locally concentrated). On the other hand, it can be confirmed that nickel and manganese are uniformly distributed in unit particles constituting the lithium transition metal oxide observed from PAM4 (unlike the SEM-EDS mapping images for PAM1 to PAM3, in the SEM-EDS mapping image for PAM4, a region having a relatively high density of dark pixels is not present, and bright pixels and dark pixels are generally uniformly distributed).

### Experimental Example 2. TEM analysis of positive electrode active material

Each positive electrode active material prepared in Preparation Example 1 was crosssectionally treated with focused ion beam (FIB), and then photographed with a transmission electron microscope to obtain a cross-sectional TEM image. Subsequently, Ni, Co and Mn, which are target elements, were EDS-mapped onto the cross-sectional TEM image.

The region in which manganese is locally concentrated is a region in which the relative concentration of manganese significantly increases compared to the background. When line scanning is performed, a gradient in which the concentration of manganese increases from the background to the region in which manganese is locally concentrated is exhibited, and in the region in which manganese is locally concentrated, the relative concentration of manganese is maintained for a certain section in a form increased compared to the background. Accordingly, in the present experimental example, after TEM-EDS mapping, a region in which the relative concentration of manganese measured through line scanning remains higher than the background was defined as a second region, which is a region in which manganese is locally concentrated, and the remaining region was defined as a first region.

The results obtained by measuring average contents of manganese in the first region and the second region through line scanning are shown in Table 1 below.

**[Table 1]**

| Classification | Average content of manganese in first region (c1) | Average content of manganese in second region (c2) | c2/c1 |
|---|---|---|---|
| Unit | at% | at% | - |
| PAM1 | 30 | 39 | 1.3 |
| PAM2 | 29 | 37 | 1.28 |
| PAM3 | 25 | 31 | 1.24 |

As confirmed in Experimental Example 1, it can be confirmed that at least one unit particle constituting the lithium transition metal oxide observed in PAM 1 to PAM3 has a region in which manganese is locally concentrated, whereas nickel and manganese are uniformly distributed in unit particles constituting the lithium transition metal oxide observed in PAM4.

Similar to the results of Experimental Example 1, referring to the results of PAM1 to PAM3 described in Table 1, it can be confirmed that the average content of manganese in the second region is greater than the average content of manganese in the first region. On the other hand, in the case of PAM5, there was no region having a different average content of manganese in the unit particles.

Additionally, diffraction patterns obtained by performing fast Fourier transform (FFT) on a cross-sectional HR-TEM image of each positive electrode active material prepared in Preparation Example 1 were indexed to identify the crystal structure in unit particles constituting the lithium transition metal oxide observed in PAM1 to PAM4.

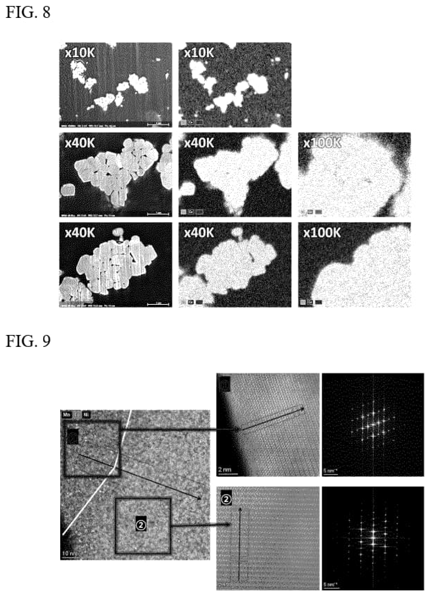

FIG. 9 schematically shows the TEM-FFT analysis results of PAM1. In FIG. 11, a region including a portion indicated by ② is a region in which the relative concentration of manganese measured through line scanning after TEM-EDS mapping remains higher than the background, and corresponds to a second region, which is a region in which manganese is locally concentrated, and a region including a portion indicated by ① corresponds to a first region, which is a region other than the second region.

The interplanar distance (d-spacing) of the (003) crystal plane in the first region and the second region, divided through the above-described line scanning, was measured, and after measuring the interplanar distances of 10 or more consecutive crystal planes, average values thereof are shown in Table 2 below.

Unlike PAM1 to PAM3, in PAM4, the average value of the interplanar distance (d-spacing) of the (003) crystal plane in unit particles constituting the lithium transition metal oxide was measured to be about 4.941 Å, and a region in which the interplanar distance (d-spacing) of the (003) crystal plane in unit particles constituting the lithium transition metal oxide was significantly different was not observed.

**[Table 2]**

| Classification | Average value of interplanar distance (d1) in first region | Average value of interplanar distance (d2) in second region | \|d1-d2\| |
|---|---|---|---|
| Units | Å | Å | A |
| PAM1 | 4.917 | 5.018 | 0.101 |
| PAM2 | 4.836 | 5.120 | 0.284 |
| PAM3 | 4.802 | 4.951 | 0.149 |

Referring to the results of Table 2, it can be confirmed that a distorted region (second region) having an average interplanar distance (d-spacing) (d2) is locally present within the first region, wherein the absolute value of the difference between the average interplanar distance (d2) and the average interplanar distance (d1) of the (003) crystal plane in the first region is 0.01 Å or more.

### Experimental Example 3. Evaluation of electrochemical properties of lithium secondary battery (half-cell)

For the lithium secondary battery (half-cell) prepared in Preparation Example 2, charge-discharge efficiency and rate capability (C-rate; discharge capacity ratio) were measured through a charge/discharge experiment applying a discharge rate of 0.1 C to 2.0 C at 25 °C and a voltage range of 2.0 V to 4.6 V using an electrochemical analyzer (Toyo, Toscat-3100).

In addition, with respect to the same lithium secondary battery, after charge/discharge was performed 50 times under conditions of 1 C/1 C within an operating voltage range of 3.0 V to 4.4 V at 45 °C, the ratio of the 50^{th} cycle discharge capacity to the initial capacity (capacity retention) was measured.

The measurement results are shown in Table 3 below.

**[Table 3]**

| Classification | Charge/discharge efficiency (%) | Discharge capacity ratio (2.0 C/0.1 C) (%) | Capacity retention @50 cy (%) |
|---|---|---|---|
| PAM1 | 88.0 | 86.4 | 89.3 |
| PAM2 | 91.6 | 87.5 | 92.2 |
| PAM3 | 91.1 | 86.9 | 92.5 |
| PAM4 | 87.6 | 84.0 | 87.8 |

Referring to the results of Table 3, it can be confirmed that the charge/discharge efficiency, discharge capacity ratio (rate capability), and capacity retention of PAM1 to PAM3 are improved compared to those of PAM4. Here, each of PAM1 to PAM3 has a distorted region (second region) locally present in the first region, wherein the absolute value of the difference between the average interplanar distance (d-spacing) (d2) of the (003) crystal plane in the second region and the average interplanar distance (d-spacing) (d1) of the (003) crystal plane in the first region is 0.01 Å or more.

Although embodiments of the present invention have been described above, those of ordinary skill in the art will be able to modify and change the present invention in various way by adding, changing or deleting components within a range not departing from the spirit of the present invention described in the claims, and such modifications or changes will also be said to be included within the scope of rights of the present invention.

## Claims

1. A positive electrode active material comprising a lithium transition metal oxide capable of reversible intercalation/deintercalation of lithium ions,
wherein the lithium transition metal oxide has a form of secondary particles in which a plurality of unit particles are agglomerated, and
at least one of the unit particles comprises a first region and a second region having different average values of an interplanar distance (d-spacing) for a (003) crystal plane, and the second region is locally present in the unit particle.

2. The positive electrode active material according to claim 1, wherein the positive electrode active material includes secondary particles having a hollow structure.

3. The positive electrode active material according to claim 2, wherein the secondary particles having a hollow structure are divided into a low-density region in which gaps are present between adjacent unit particles and a high-density region having a higher agglomeration density of the unit particles than the low-density region, and
the average value of a ratio of an outer diameter of the low-density region to a particle diameter of the secondary particles is 5% to 90%.

4. The positive electrode active material according to claim 1, wherein the second region is present as an isolated region in the unit particle.

5. The positive electrode active material according to claim 1, wherein the second region is present as a plurality of independent island shapes in the unit particle.

6. The positive electrode active material according to claim 1, wherein at least a part of the second region is present to be in contact with a surface of the unit particle.

7. The positive electrode active material according to claim 1, wherein the lithium transition metal oxide partially comprises unit particles in which the second region is locally present.

8. The positive electrode active material according to claim 1, wherein the average interplanar distance (d-spacing) of the (003) crystal plane in the first region is smaller than that of the (003) crystal plane in the second region.

9. The positive electrode active material according to claim 1, wherein the average content of manganese in the second region is greater than that of manganese in the first region.

10. The positive electrode active material according to claim 9, wherein the ratio (c2/c1) of the average content (c2) of manganese in the second region to the average content (c1) of manganese in the first region is greater than 1 and 2 or less.

11. The positive electrode active material according to claim 1, wherein the lithium transition metal oxide has an average composition represented by Chemical Formula 1 below:
[Chemical Formula 1] LiₐNi_{1-(b+c+d)}Co_{b}Mn_{c}M1_{d}O₂
in Chemical Formula 1,
M1 is at least one selected from Na, K, Mg, Ba, B, Ce, Hf, Ta, Cr, F, Al, V, Ti, Fe, Zr, Zn, Si, Y, Nb, Ga, Sn, W, Mo, P, Sr, Ge, Nd, Gd, and Cu, and
0.95≤a≤1.15, 0.02≤b≤0.20, 0.15≤c≤0.35, 0≤d≤0.2, and 0.3≤1-(b+c+d)<0.7.

12. The positive electrode active material according to claim 1, wherein the average particle diameter (D₅₀) of the unit particles ranges from 0.02 µm to 0.5 µm.

13. The positive electrode active material according to claim 1, wherein the average particle diameter (D₅₀) of the secondary particles ranges from 2.0 µm to 18.0 µm.

14. A positive electrode comprising the positive electrode active material according to any one of claims 1 to 13.

15. A lithium secondary battery using the positive electrode according to claim 14.
